(19) **Europäisches Patentamt**
**European Patent Office**
**Office européen des brevets**

(11) **EP 4 491 300 A1**

(12) **EUROPEAN PATENT APPLICATION**

(43) Date of publication:
**15.01.2025 Bulletin 2025/03**

(21) Application number: **24184918.1**

(22) Date of filing: **27.06.2024**

(51) International Patent Classification (IPC):
**B22F 1/05** (2022.01)   **B22F 1/065** (2022.01)
**B22F 1/14** (2022.01)   **B22F 3/00** (2021.01)
**B33Y 70/00** (2020.01)   **B04C 5/04** (2006.01)
**B22F 9/08** (2006.01)   **B22F 1/145** (2022.01)
**B01D 35/20** (2006.01)   **B03B 5/00** (2006.01)

(52) Cooperative Patent Classification (CPC):
(C-Sets available)
**B22F 1/065; B01D 35/20; B03B 5/00; B04C 5/04;
B22F 1/05; B22F 1/14; B22F 1/147; B22F 3/003;
B22F 9/082; B33Y 70/00;** B07B 1/00;
B22F 2009/0824; B22F 2009/0896        (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023 US 202363510945 P**

(71) Applicant: **General Electric Company
Schenectady, NY 12345 (US)**

(72) Inventors:
• **Larouche, Frédéric
Saint-Eustache, QC CA J7R 0L5 (CA)**
• **Poirié, Thomas
Saint-Eustache, QC CA J7R 0L5 (CA)**
• **Balmayer, Matthieu
Saint-Eustache, QC CA J7R 0L5 (CA)**
• **Bergeron, Olivier
Saint-Eustache, QC CA J7R 0L5 (CA)**
• **Kroeger, Jens
Saint-Eustache, QC CA J7R 0L5 (CA)**

(74) Representative: **Hafner & Kohl PartmbB
Schleiermacherstraße 25
90491 Nürnberg (DE)**

(54) **SYSTEM AND METHOD FOR ATOMIZED POWDER PROCESSING AND A PROCESSED POWDER**

(57)    A method for removing ultrafine particles (206) from an atomized powder (306) is provided. The method includes contacting the atomized powder (306) with a removal liquid (324), the atomized powder (306) comprising fine particles (202) and ultrafine particles (206), wherein contacting the atomized powder (306) with the removal liquid (324) comprises adding energy to a mixture (336) of the atomized powder (306) and the removal liquid (324) to detach the ultrafine particles (206) from the fine particles (202); and separating the removal liquid (324) and ultrafine particles (206) from the fine particles (202).

```
                           ┌─── 100
        ┌──────────────────────┐
        │    METAL SOURCE      │── 102
        └──────────────────────┘
                   │
        ┌──────────────────────┐
        │    ATOMIZATION       │── 104
        └──────────────────────┘
                   │
        ┌──────────────────────┐
        │      SIEVING         │── 106
        └──────────────────────┘
                   │
        ┌──────────────────────┐
        │ULTRA-FINE PARTICLE   │── 108
        │     REMOVAL          │
        └──────────────────────┘
                   │
        ┌ ─ ─ ─ ─ ─ ─ ─ ─ ─ ─ ─┐
        └ ─ ─ ─ ─ ─ ─ ─ ─ ─ ─ ─┘── 106'
                   │
        ┌──────────────────────┐
        │      DRYING          │── 110
        └──────────────────────┘
                   │
        ┌──────────────────────┐
        │     PACKAGING        │── 112
        └──────────────────────┘
```

FIG. 1

**(Cont. next page)**

**EP 4 491 300 A1**

(52) Cooperative Patent Classification (CPC): (Cont.)

C-Sets
B22F 2998/10, B22F 9/082, B22F 1/10,
B22F 2009/0896;
B22F 2998/10, B22F 9/082, B22F 1/147,
B22F 2009/0896;
B22F 2999/00, B22F 1/065, B22F 2009/0896,
B22F 2202/15, B22F 2202/01;
B22F 2999/00, B22F 3/003, B22F 1/14,
B22F 2009/0896

**Description**

FIELD

The present disclosure relates to a system and method for processing an atomized powder, and the powder processed according to the same.

BACKGROUND

Typically, the desired features of high quality reactive metal powders will be a combination of high sphericity, density, purity, and flowability. Fine reactive metal powders are useful for applications such as 3D printing, powder injection molding, hot isostatic pressing and coatings. Such fine powders are used in aerospace, biomedical and industrial fields of applications.

BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:

FIG. 1 is a schematic, flow diagram of a process in accordance with an exemplary aspect of the present disclosure.
FIG. 2 is a magnified view of a sample of an atomized powder in accordance with an exemplary aspect of the present disclosure.
FIG. 3 is an ultrafine particle removal system in accordance with an exemplary aspect of the present disclosure.
FIG. 4 is an ultrafine particle removal system in accordance with another exemplary aspect of the present disclosure.
FIG. 5 is an ultrafine particle removal system in accordance with yet another exemplary aspect of the present disclosure.
FIG. 6 is a liquid classifier system as may be incorporated into an ultrafine particle removal system of the present disclosure.
FIG. 7 is a table including numerical values corresponding to several of the exemplary powders in FIG. 8.
FIG. 8 is a plot of powders in accordance with one or more exemplary embodiments of the present disclosure.
FIG. 9 is a table of examples of four reactive metal powders exemplifying the benefits of the processes of the present disclosure.

DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

The expression "particle size distribution" refers to a powder in which at least 80% of the obtained powder has a particle size distribution between a lower bound and a higher bound. The value is measured according to ASTM B214-22 standard for at least the upper cut, and optionally ASTM B822-20 for the lower cut.

The expression "reactive metal powder" as used herein refers to a metal powder formed of an oxygen-reactive metal, a nitrogen-reactive metal, or both. For example, a reactive metal powder may include at least one member chosen from one of titanium, titanium alloys, zirconium, zirconium alloys, magnesium, magnesium alloys, cobalt, cobalt superalloys, nickel, nickel superalloys, niobium, niobium alloys, aluminum, aluminum alloys, molybdenum, molybdenum alloys, tungsten, or tungsten alloys.

The term "raw metal powder" as used herein refers to a metal powder obtained directly from an atomization process without any post processing steps such as sieving or classification techniques.

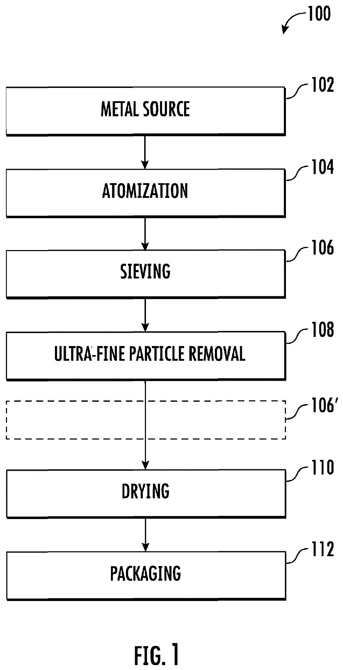

Referring now to the drawings, wherein identical numerals indicate the same elements throughout the figures, FIG. 1 is a flow diagram of a process 100 for processing a metal into a finished metal powder. More specifically, for the embodiment depicted, the process 100 is for processing a reactive metal into a finished reactive metal powder.

The process 100 includes at 102 providing a metal from a metal source, and at 104 atomizing the metal provided at 102. The metal may be a reactive metal, such as at least one of titanium, titanium alloys, zirconium, zirconium alloys, cobalt superalloys, nickel, nickel superalloys, magnesium, magnesium alloys, niobium, niobium alloys, aluminum, aluminum alloys, molybdenum, molybdenum alloys, tungsten, tungsten alloys, or a combination thereof. The metal provided at 102 may be in the form of a metal wire, metal bars, metal powder, etc.

Atomizing the metal at 104 may include utilizing any suitable atomization process. For example, in at least one exemplary embodiment, atomizing metal at 104 may include atomizing the metal using a plasma atomization process. In particular, in at least one exemplary embodiment of the present disclosure, atomizing the metal at 104 may include utilizing one or more of the exemplary plasma atomization processes discussed in U.S. Patent Number 11,198,179, issued on December 14, 2021, and/or in U.S. Patent Application Number 2019/0001416, published on January 3, 2019. Each of the foregoing is hereby incorporated by reference fully and for all purposes.

Accordingly, it will be appreciated that in at least one exemplary embodiment of the present disclosure, atomizing the metal at 104 may include preheating the metal and feeding the preheated metal into a plasma flow provided by one or more plasma nozzles, whereby the plasma flow superheats and breaks the preheated metal into a fine powder. An additive gas may be incorporated to provide benefits to a flowability of a resulting powder.

In other exemplary embodiments, other suitable atomization processes may be utilized, such as other suitable plasma atomization processes, gas atomization processes, skull melting gas atomization processes, electrode induction melting gas atomization processes (EIGA processes), plasma rotating electrode processes, etc. Moreover, it will be appreciated, that as used herein, atomizing the metal at 104 may additionally, or alternatively includes a spheroidization process, such as a plasma (RF, DC, MW) spheroidization process, such as one or more of the exemplary spheroidization processes discussed in U.S. Patent Number 11,235,385, issued on February 1, 2022, which is hereby incorporated by reference fully and for all purposes.

Atomizing the metal at 104 may yield a raw metal powder. Referring still to FIG. 1, the process 100 further includes at 106 sieving the raw metal powder to achieve an atomized powder having a particle size distribution. Sieving the raw metal powder at 106 may include dry sieving or applying gas classification to the raw metal powder, wet sieving the raw metal powder, or a combination thereof. Dry sieving the raw metal powder may include passing the raw metal powder through one or more mesh sieves or filters while, e.g., applying vibrations to the raw metal powder, the mesh sieves or filters, or both.

As noted, the atomized powder achieved from sieving at 106 may define the particle size distribution. In particular, the atomized powder achieved from sieving at 106 may define a particle size distribution from 0 micrometers ($\mu$m) to 150 $\mu$m. It will be appreciated that as used herein, and in the context of sieving at 106, the term "particle size distribution" has the definition provided above. The atomized powder may be achieved from passing a raw metal powder through a first mesh sieve or filter designed to remove particles larger than an upper range of the particle size distribution (e.g., 150 $\mu$m in the embodiment above), also called an upper cut-size, and then optionally subjecting the raw metal powder to a second filtering or classification step designed to remove particles smaller than a lower range of the particle size distribution (e.g., 10 $\mu$m in some embodiments). This lower limit is also called the lower cut-size.

It will be appreciated that in other exemplary embodiments of the present disclosure, the atomized powder achieved from sieving, at 106, may define a particle size distribution where the lower range is between 0 $\mu$m and 75 $\mu$m, such as between 5 $\mu$m and 45 $\mu$m, such as 7 $\mu$m, 10 $\mu$m, 15 $\mu$m, 20 $\mu$m, 25 $\mu$m, 30 $\mu$m, 40 $\mu$m, 50 $\mu$m, 60 $\mu$m, or 70 $\mu$m. Further, the atomized powder achieved from sieving, at 106, may define a particle size distribution where the upper range is between 20 $\mu$m and 150 $\mu$m, such as between 45 $\mu$m and 75 $\mu$m, such as 40 $\mu$m, 53 $\mu$m, 65 $\mu$m, 75 $\mu$m, 85 $\mu$m, 95 $\mu$m, 105 $\mu$m, or 115 $\mu$m.

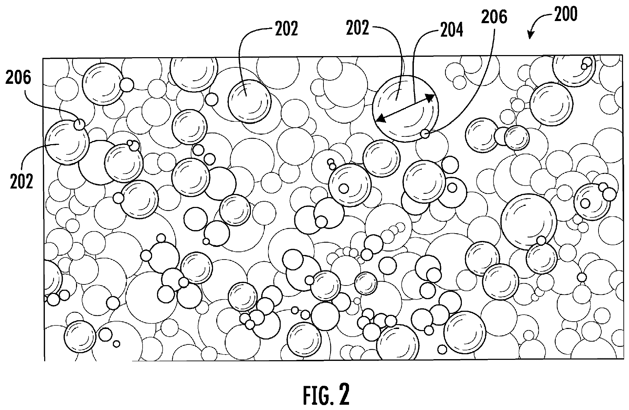

As will further be appreciated from the description herein, despite sieving, at 106, the atomized powder may further include ultrafine particles, or satellites, attached to fine particles having a size within the particle size distribution. For example, referring now briefly to FIG. 2, a magnified view of a sample 200 of an atomized powder in accordance with an exemplary aspect of the present disclosure is provided. The atomized powder includes fine particles 202 defining a size within the particle size distribution. Notably, as used herein, the term "size" with reference to a particle refers to a maximum crosswise measurement 204. For example, when the particle is a perfect sphere, the maximum crosswise measurement 204 is a diameter of the sphere. The atomized powder further includes ultrafine particles 206 coupled to the fine particles 202. In at least certain exemplary aspects, the ultrafine particles 206 may define a size smaller than the particle size distribution (i.e., a size smaller than a lower bound of the particle size distribution). For example, in at least certain exemplary embodiments, the ultrafine particles 206 may define a size less than or equal to 7 $\mu$m, such as less than or equal to 5 $\mu$m.

It will be appreciated that an interaction between the ultrafine particles 206 and the fine particles 202 may prevent the ultrafine particles 206 from being removed from the yielded atomized powder during the sieving process. For example, in at least certain exemplary embodiments, a dipole-dipole or complex electric interaction between one or more of the ultrafine particles 206 and one or more of the fine particles 202 may create a cohesion force between them that may be stronger than the force exerted on the ultrafine particles 206 during the sieving process (see sieving process at 106 in FIG. 1).

The existence of ultrafine particles 206 adhering to the fine particles 202 in the yielded atomized powder may reduce a flowability of the atomized powder due to, e.g., an increased roughness of the fine particles and various electromagnetic interactions.

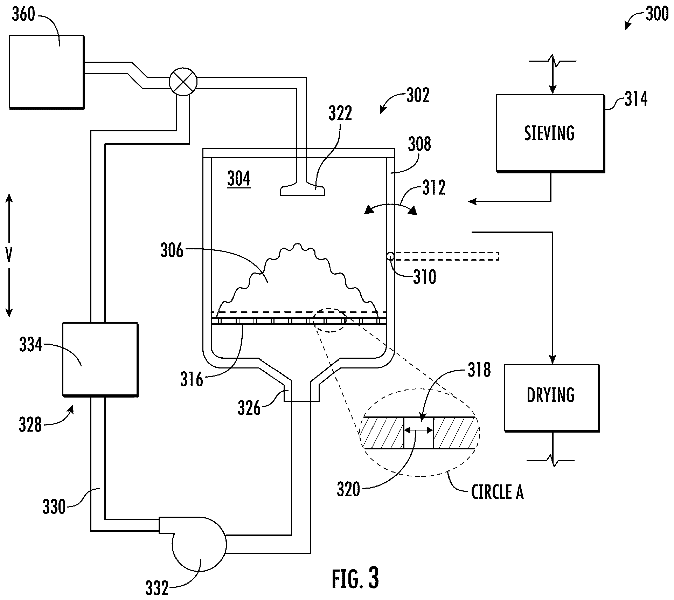

Referring back to FIG. 1, in order to increase the flowability of the atomized powder, the process 100 further includes at 108 subjecting the atomized powder to an ultrafine particle removal process to yield a processed atomized powder. The ultrafine particle removal process to which the atomized powder is subjected to at 108 will be explained in greater detail below with reference to, e.g., FIGS. 3 through 5. For example, as will be discussed in more detail below, the ultrafine particle removal process to which the atomized powder is subjected to at 108 may include exposing the atomized powder to a liquid, referred to herein below as a removal liquid. Accordingly, the process 100 of FIG. 1 further includes at 110 drying the processed atomized powder. Additional details and exemplary methods for drying the processed atomized powder at 110 will also be described in detail below.

The dry, processed atomized powder, referred to herein as a finished atomized powder, may then be packaged at 112 or otherwise put into a condition for utilization.

Briefly, as is depicted in phantom in FIG. 1, although the step of sieving the raw metal powder at 106 is provided prior to removing the ultrafine particles 206 (see FIG. 2) at 108 in the exemplary aspect of the process 100 described above, in other embodiments, the process 100 of FIG. 1 may additionally or alternatively include a sieving step 106' after removing the ultrafine particles 206 at 108.

Referring now to FIG. 3, an ultrafine particle removal system 300 in accordance with an exemplary aspect of the present disclosure is depicted schematically.

The exemplary ultrafine particle removal system 300 includes a container 302 defining a mixing cavity 304 for receiving an atomized powder 306. In particular, for the embodiment depicted, the container 302 includes a door 308 rotatable about a hinge 310 (as indicated by arrow 312) between a closed position (shown) and an open position (shown in phantom). When the door 308 is in the open position, the atomized powder 306 may be added to the mixing cavity 304, or removed from the mixing cavity 304. When the door 308 is in the closed position, the door 308 may form a fluid tight seal with a remainder of the container 302.

The atomized powder 306 may be generated during execution of a process for processing a metal into a finished metal powder, such as the exemplary process 100 of FIG. 1. Accordingly, the atomized powder 306 may be provided to the mixing cavity 304 of the container 302 following a sieving step 314 to yield the atomized powder 306 defining a particle size distribution.

The container 302 of the ultrafine particle removal system 300 of FIG. 3 further includes an ultrafine particle filter 316 exposed to the mixing cavity 304. More specifically, for the embodiment depicted, the mixing cavity 304 is positioned above the ultrafine particle filter 316 along a vertical direction V defined by the ultrafine particle removal system 300. As will be appreciated the atomized powder includes fine particles having a size within the particle size distribution and ultrafine particles having a size that may be smaller than the particle size distribution (see particles 202, 206 of FIG. 2). The ultrafine particle filter 316, as is depicted in the callout Circle A, defines a plurality of openings 318 defining a diameter 320 sufficiently small to prevent particles larger than the ultrafine particles of the atomized powder 306 from passing therethrough. For example, in at least certain exemplary aspects, the diameter 320 of the openings 318 may be between 5 $\mu$m and 10 $\mu$m.

It will be appreciated that the ultrafine particle filter 316 may have any suitable configuration. In at least certain exemplary embodiments, the ultrafine particle filter 316 may be a metal porous filter. Such metal porous filter may have a nominal opening larger than the lower cut-size of a powder and still preferentially filter out the ultrafine particles, depending on the pressure difference and thickness of the powder cake.

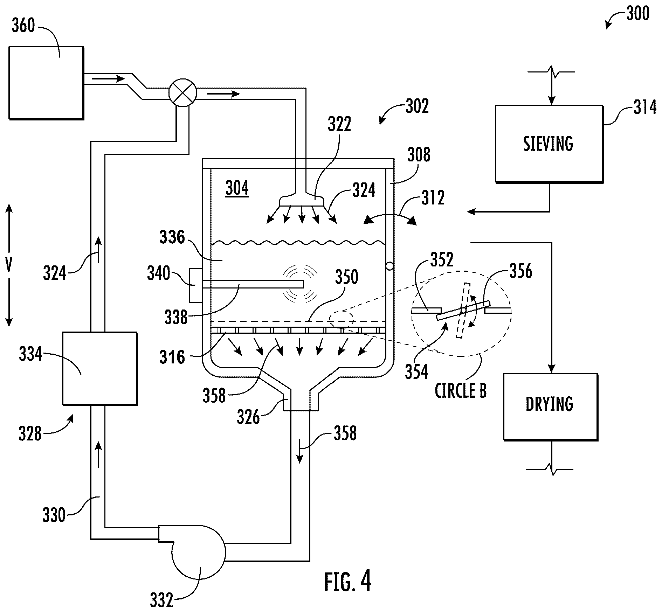

As noted, an attraction force between the ultrafine particles and fine particles of the atomized powder 306 may be sufficiently strong to resist a mechanical sieving process. Accordingly, the ultrafine particle removal system 300 of FIG. 3 further includes a fluid nozzle 322 in fluid communication with the mixing cavity 304 for providing a removal liquid 324 (see FIG. 4, discussed below) to the mixing cavity 304. As will be explained in more detail below, the removal liquid 324 may be water, a fluorocarbon liquid, a halocarbon liquid, an organic or inorganic solvent, or a combination thereof. One criterion for the choice of liquid should be that is does not react chemically with the powder such as to maintain the original purity of the powder.

The container 302 further defines an outlet 326 at a location downstream the ultrafine particle filter 316 from the fluid nozzle 322, and the ultrafine particle removal system 300 further includes a recirculation assembly 328 having a recirculation loop 330 (formed of, e.g., one or more conduits) fluidly coupled to the outlet 326, and therefore to the mixing cavity 304 at the location downstream the ultrafine particle filter 316. The recirculation assembly 328 is further fluidly coupled to the fluid nozzle 322 for recirculating the removal liquid 324 received therethrough.

Notably, for the embodiment depicted the recirculation assembly 328 further includes a pump 332, generating a pressure difference, for urging a fluid flow through the recirculation loop 330 of the recirculation assembly 328, and a microparticle filter 334. The microparticle filter 334 may be configured to extract particles smaller than, e.g., 1 $\mu$m, as will be explained in more detail below.

Referring now to FIG. 4, the exemplary ultrafine particle removal system 300 of FIG. 3 is depicted during operation. In particular, during operation, the ultrafine particle removal system 300 is configured to contact the atomized powder 306 (see FIG. 3) received within the mixing cavity 304 of the container 302 with the removal liquid 324 to form a mixture 336 of the atomized powder 306 (see FIG. 3) and the removal liquid 324. For the embodiment depicted, the ultrafine particle removal system 300 is further configured to add energy to the mixture 336. As noted, the atomized powder 306 includes fine particles and ultrafine particles (see particles 202, 206 of FIG. 2) and adding energy to a mixture 336 facilitates detaching the ultrafine particles from the fine particles within the mixture 336.

In the embodiment of FIG. 4, adding energy to the mixture 336 includes spraying the atomized powder 306 with the removal liquid 324 using the fluid nozzle 322, e.g., at a pressure greater than an ambient pressure (e.g., between 5 pounds per square inch (psi) and 250 psi, such as between 10 psi and 100 psi).

Moreover, for the embodiment depicted, adding energy to the mixture 336 further includes exposing the mixture 336 to ultrasonic energy. In particular, for the embodiment shown, the ultrafine particle removal system 300 further includes an ultrasonic probe 338 extending into the mixing cavity 304 at a location to interact with the mixture 336. The ultrasonic probe 338 is operably connected to a power source 340, such that in response to a command, the ultrasonic probe 338 may be provided with a sufficient power to provide ultrasonic energy to the mixture 336 of the atomized powder 306 and the removal liquid 324.

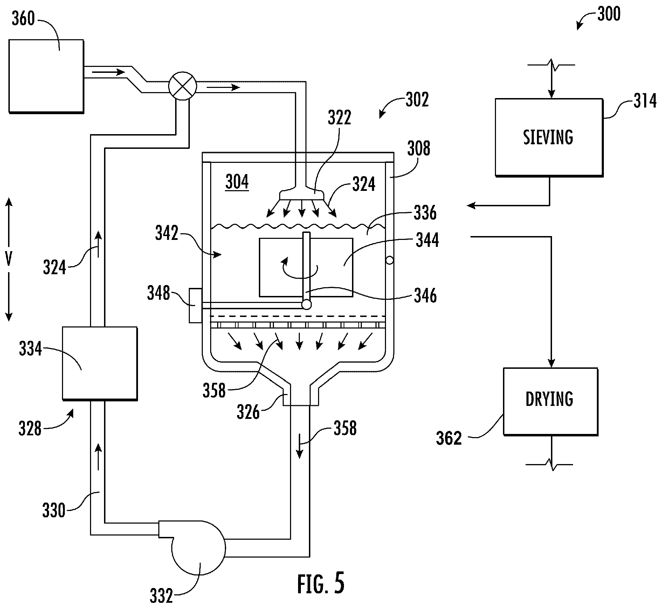

It will be appreciated, however, that in other exemplary embodiments, energy may be added to the mixture 336 of the atomized powder 306 (see FIG. 3) and the removal liquid 324 in any other suitable manner. For example, referring briefly to FIG. 5, an ultrafine particle removal system 300 in accordance with another exemplary embodiment of the present disclosure is provided. The exemplary ultrafine particle removal system 300 of FIG. 5 may be configured in substantially the same manner as the ultrafine particle removal system 300 of FIG. 4, and the same or similar numbers may refer to the same or similar parts. However, for the embodiment of FIG. 5, instead of the ultrasonic probe 338, the ultrafine particle removal system 300 includes a mixer 342 positioned within the mixing cavity 304 for adding energy to a mixture 336 of atomized powder 306 (see FIG. 3) and removal liquid 324. The mixer 342 includes one or more paddles 344, and more specifically, a plurality of paddles 344 mounted to a shaft 346 configured to rotate about an axis of the shaft 346 to add energy to the mixture 336. The plurality of paddles 346 generate a centrifugal force which could also be generated by a swirling flow of a liquid. The ultrafine particle removal system 300 of FIG. 5 further includes a power source 348 operably coupled to the mixer 342 for providing power to the mixer 342.

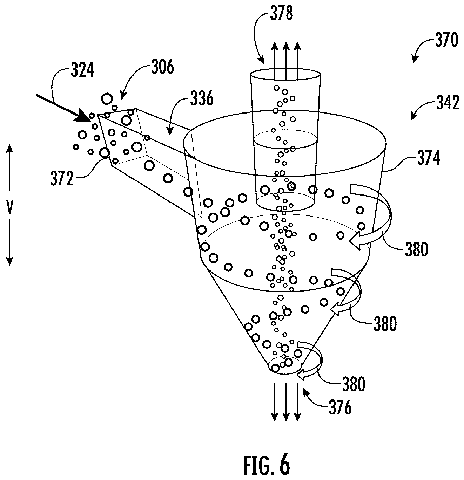

Additionally, or alternatively, in other exemplary embodiments, energy may be added to the mixture 336 using a liquid classifier system. Referring briefly now to FIG. 6, a schematic view is provided of a liquid classifier system 370 as may be incorporated into an ultrafine particle removal system 300 of the present disclosure (e.g., into one or more of the ultrafine particle removal systems 300 described above). The liquid classifier system 370 of FIG. 6 utilizes a centrifugal force, where a removal liquid 324 is introduced through an inlet 372 along with an atomized powder 306 with a velocity, such that as a mixture 336 of the atomized powder 306 (see FIG. 3) and the removal liquid 324 is provided into a cylindrical body 374 of the liquid classifier system 370, the mixture 336 is swirled within the body 374 (see arrows 380). A first outlet 376 of the liquid classifier system 370 is located below a second outlet 378 of the liquid classifier system 370 along a vertical direction V, such that coarser particles may be received through the first outlet 376 and a mixture of the ultrafine particles and removal liquid may be received through the second outlet 378.

It will be appreciated that the liquid classifier system 370 depicted in FIG. 6 is provided by way of example only. In other exemplary embodiments, other suitable liquid classifier systems may be utilized in an ultrafine particle removal system 300 of the present disclosure.

Referring now back to FIG. 4, it should be appreciated that contacting the atomized powder 306 (see FIG. 3) with the removal liquid 324 may allow for the removal liquid 324 to shield electric interactions (such as dipole-dipole interaction) between the ultrafine particles and the fine particles (see particles 202, 206 of FIG. 2) of the atomized powder 306. In particular, the removal liquid 324 may define an electric permittivity that shields the electric interactions (such as dipole-dipole interaction) between the ultrafine particles and the fine particles, such that the ultrafine particles may detach easier with the addition of the energy to the mixture 336. It should further be appreciated that adding energy to the mixture 336 of the atomized powder 306 and the removal liquid 324 may urge a removal of the ultrafine particles from the fine particles of the atomized powder 306, such that the ultrafine particles are suspended in the removal liquid 324 within the mixture 336.

The ultrafine particle removal system 300 is further configured to separate the removal liquid 324 and detached ultrafine particles from the fine particles after adding the energy to the mixture 336. As is depicted in phantom in FIG. 4, and schematically in more detail in the callout Circle B in FIG. 4, the container 302 further includes a blocker layer 350 selectively fluidly isolating the ultrafine particle filter 316 from the mixing cavity 304. The blocker layer 350, in the exemplary embodiment depicted, includes a wall 352 defining a plurality of openings 354, and a respective plurality of flapper valve doors 356 positioned within each of the plurality of openings 354. Each flapper valve door 356 may be pivotable between an open position (depicted in phantom), allowing a fluid flow through the opening 354, and a closed position, preventing a fluid flow through the opening 354.

In such a manner, it will be appreciated that the blocker layer 350 may allow for the ultrafine particle removal system 300 to add a desired amount of energy to the mixture 336 of the atomized powder 306 (see FIG. 3) and the removal liquid 324 prior to separating the removal liquid 324 and detached ultrafine particles from the fine particles.

In the embodiment of FIG. 4, separating the removal liquid 324 and the detached ultrafine particles from the fine particles may include allowing the removal liquid 324 and detached ultrafine particles to flow through the ultrafine particle filter 316 of the container 302, as indicated by arrows 358 (representing a mix of removal liquid 324 and ultrafine particles), and through the outlet 326 to the recirculation assembly 328. As noted, the recirculation assembly 328 includes a microparticle filter 334, which may remove the ultrafine particles from the mix 358, leaving a removal liquid 324 that may be reused in the ultrafine particle removal system 300. In such a manner, it will be appreciated that the removal liquid 324 may be filtered to remove the detached ultrafine particles from the removal liquid 324 within the recirculation loop 330 of the recirculation assembly 328, and the filtered removal liquid 324 may subsequently be provided to the same or a second batch of atomized powder (not shown). Such may result in a decrease in waste during operation of the ultrafine particle removal system 300.

Briefly, the ultrafine particle removal system 300 further includes a source 360 of removal liquid 324 in fluid communication with the recirculation assembly 328 and the fluid nozzle 322 to ensure a sufficient amount of removal liquid 324 is available for the ultrafine particle removal process.

After separating the removal liquid 324 and the ultrafine particles from the fine particles, the fine particles may be removed (e.g., through the door 308 of the container 302) and dried using a drying apparatus 362. The drying apparatus 362 may be a vacuum drying apparatus configured to expose the fine particles from the ultrafine particle removal system 300 to a vacuum environment (defining a pressure less than an ambient pressure), so as to control, e.g., an atmosphere and temperature to which the fine particles are exposed. A thermal furnace may also be used to dry the powder.

It should be appreciated that removal of the ultrafine particles using ultrafine particle removal system 300, given a size of the ultrafine particles, may not result in a substantial reduction in a mass of the atomized powder 306 (see FIG. 3). For example, the fine particles, after having been dried using the drying apparatus 362, which may be referred to as a finished metal powder, may define a finished metal powder mass, $M_{Finish}$. The atomized powder 306 provided to the ultrafine particle removal system 300 (see FIG. 3), prior to the ultrafine particles having been removed, may define an initial mass, $M_{Initial}$. The ratio of the finished metal powder mass, $M_{Finish}$, to the initial mass, $M_{Initial}$, may be greater than or equal to 0.90, such as greater than or equal to 0.95. Accordingly, the process of removing the ultrafine particles from the atomized powder 306 may not result in a substantial reduction in a mass of the finished metal powder.

Notably, it will be appreciated that if the ultrafine removal process described herein is used in conjunction with a wet-sieving process in the same apparatus, the finished metal powder mass, $M_{Finish}$, will be substantially lower (e.g., a ratio of finished metal powder mass, $M_{Finish}$, to the initial mass, $M_{Initial}$, may be less than 0.85, such as less than 0.8), being affected by two processes between the time it is inserted into the cavity and being dried.

As briefly mentioned above, the removal liquid 324 may be water or an organic or inorganic solvent. Additionally, or alternatively, when the reactive metal powder is a reactive metal powder that reacts poorly with water, the removal liquid 324 may be an organic or inorganic solvent, a halocarbon liquid, or a fluorocarbon liquid. For example, in certain exemplary embodiments, the reactive metal powder may include aluminum or aluminum alloy, and the removal liquid may be a halocarbon liquid to prevent the powder from reacting with water.

Halocarbon liquids, such as fluorocarbon liquids, have the benefit of avoiding reaction or corrosion with the reactive metal powder. Halocarbon liquids also generally have relatively low boiling points, such that they may evaporate relatively quickly from the reactive metal powders after processing. Examples of a fluorocarbon liquid in accordance with various aspects of the present disclosure include Novec™, hydrofluorocarbons and fluorinated ketones.

In addition, the present disclosure further provides for a method for removing ultrafine particles from an atomized powder. The method may be included as part of the process 100 of FIG. 1, may be utilized with the ultrafine particle removal system(s) 300 of FIGS. 3 through 5, or may be included as part of or utilized with any other suitable process or system.

The method includes at (a) contacting the atomized powder with a removal liquid to form a mixture of the atomized powder and the removal liquid. The atomized powder includes fine particles and ultrafine particles. In at least certain exemplary aspects, the atomized powder may be free from any dopants and/or flowability enhancing agents or molecules attached that decrease the particles' hydrophilicity. Such hydrophilicity-decreasing attached molecules are described, for example, in the Canadian patent application CA 3138388. The atomized powder of the present disclosure does not involve intentional element addition as mentioned by ASTM F1580-18 or compositional doping as mentioned by AMS 7002A.

The method further includes at (b) adding energy to the mixture of the atomized powder and the removal liquid to detach the ultrafine particles from the fine particles.

In certain exemplary aspects, adding energy to the mixture of the atomized powder and the removal liquid at (b) includes exposing the mixture to ultrasonic energy, mechanically agitating the mixture (e.g., mixing or stirring the mixture), or both. In additional or alternative exemplary aspects, adding energy to the mixture of the atomized powder and the removal liquid at (b) includes spraying the atomized powder with a pressurized removal liquid.

The method further includes at (c) separating the removal liquid and detached ultrafine particles from the fine particles.

The method may further include at (d) classifying or sieving a raw atomized powder to obtain the atomized powder prior to contacting the atomized powder with the removal liquid.

In certain exemplary aspects, the atomized powder may be a first batch of atomized powder, and the method may further include: at (e) receiving the separated removal liquid and detached ultrafine particles in a recirculation loop; at (f) filtering the detached ultrafine particles from the removal liquid within the recirculation loop; and at (g) providing the filtered removal liquid back to the first batch of atomized powder, or to a second batch of atomized powder.

It will be appreciated that previous thinking has been that it would be undesirable to expose a reactive metal powder to humidity, as humidity is generally thought of as increasing a cohesion between fine particles, and particularly between ultrafine particles and fine particles. In such a manner, traditional thinking has been that exposing a reactive metal powder to humidity would decrease a flowability of the resulting powder. However, the inventors of the present disclosure discovered unexpectedly that through exposing the reactive metal powders to a sufficient amount of a removal liquid to form a mixture of reactive metal powder and removal liquid, and adding energy to the mixture, the ultrafine particles may in fact be removed from the fine particles, and further that such removal of ultrafine particles may result in a significant improvement of the flowability of the reactive metal powder after drying.

In particular, a common measure for how well a powder flows (i.e., its flowability, $F_{RMP}$) is through use of a Hall test in accordance with ASTM B213-20. Removal of the ultrafine particles from an atomized powder in accordance with the present disclosure has been found to provide significant benefits to the flowability, $F_{RMP}$, of the resulting metal powder. The increase in flowability, $F_{RMP}$, may provide significant benefits in, e.g., the additive manufacturing industry, and other industries as well.

The inventors have found that a size of the particles, $S_{RMP}$, of the finished metal powder (and an average mass of each particle, $M_C$, having size $S_{RMP}$) and an apparent density, $D_{RMP}$, of the finished metal powder both affect the finished metal powder's volumetric flowability, $F_{VRMP}$. For example, larger particles generally have improved volumetric flowability, $F_{VRMP}$, as compared to smaller powders having similar characteristics, and more dense finished metal powders similarly also have generally improved flowability, $F_{RMP}$, as compared to less dense finished metal powders having similar characteristics.

In order to function in a desired manner in, e.g., additive manufacturing machines, the inventors have found that a minimum volumetric flowability, $F_{VRMP}$, should be achieved. These volumetric flowabilities, $F_{VRMP}$, may be reached using the improvements associated with the processes and systems described herein. Finished metal powders exhibiting flowability characteristics below these thresholds may not be capable of functioning in a desired manner and may, e.g., clog up or otherwise slow down production using the powders. The relationship discovered by the inventors between: volumetric flowability, $F_{VRMP}$; size of the particles in the finished metal powder, $S_{RMP}$; apparent density, $D_{RMP}$; average mass of each particle, $M_C$, having size $S_{RMP}$; and a bulk density, $D_{BULK}$, of the alloy found to provide the benefits described above is as follows:

$$F_{VRMP} \geq 0.3 \times \ln(M_C) + 2,$$

where $M_C$ is the average mass of a particle of size $S_{RMP}$, and is between 0.001 micrograms and 1 microgram. $M_C$ is obtained by calculating the mass of a sphere of radius equal to half of the size, $S_{RMP}$, and having a density equal to the bulk density, $D_{BULK}$, of the alloy. In particular, $M_C$ is found using the following relationship:

$$M_C = \frac{4\pi(S_{RMP}/2)^3}{3} \times D_{BULK},$$

wherein $S_{RMP}$ is a D10 value (defined as the point on a size distribution curve below which 10% of the particles fall, as measured per ASTM B822-20) and is between 5 micrometers and 30 micrometers. The equipment used to perform the measuring method is the Beckman Coulter LS 13 320. $D_{BULK}$ is the bulk density of the alloy and can be obtained by ASTM B923-22. In the above relationship, $D_{BULK}$ may be between 1.5 and 20 grams per cubic centimeter. There are a variety of instruments that can be used for the quantification of particle size by laser diffraction following ASTM B822-20. These include Beckman Coulter™ LS 13 320, Cilas990L™, Malvern™ Mastersizer™, Sympatec™ HELOS™, Microtrac™ Particle Size Analyzer S3500™, etc. As will be appreciated, there may be inherent variability in the D10 values obtained from a particular powder tested using the available equipment under the guidance of ASTM B822-20. For the purposes of the present disclosure, the D10 value ranges provided herein are intended to refer to a powder that when testing using at least one of the accepted methods and equipment per ASTM B822-20 indicates a D10 value within the disclosed and/or claimed ranges.

$F_{VRMP}$ is the volumetric flowability and is between 0.1 cubic centimeter per second and 1.4 cubic centimeters per second. $F_{VRMP}$ is obtained by dividing the 50 grams used in a Hall flow test (per ASTM B213-20) by the time needed for the powder to flow through the funnel ($F_{HFT}$; expressed in seconds) and then dividing by the apparent density, $D_{RMP}$, expressed in grams per cubic centimeter and obtained per ASTM B212-21. The final units for the volumetric flowrate, $F_{VRMP}$, is cubic centimeters divided by seconds. $D_{RMP}$, measured as per ASTM B212-21, is between 0.8 grams per cubic centimeter and 11 grams per cubic centimeter. In particular, $F_{VRMP}$ is found using the following relationship:

$$F_{VRMP} = \frac{\left(50/F_{HFT}\right)}{D_{RMP}}.$$

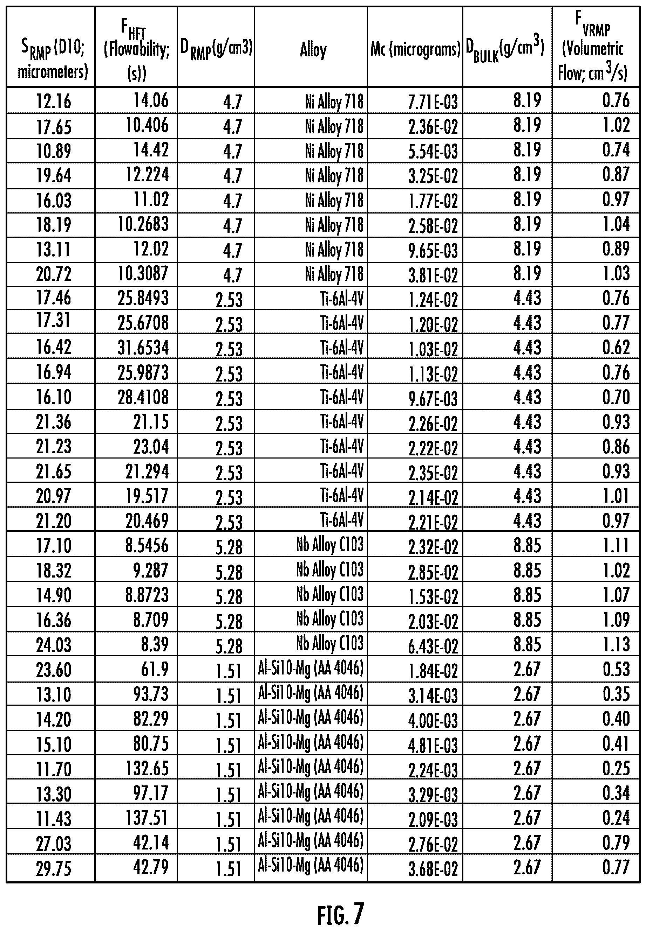

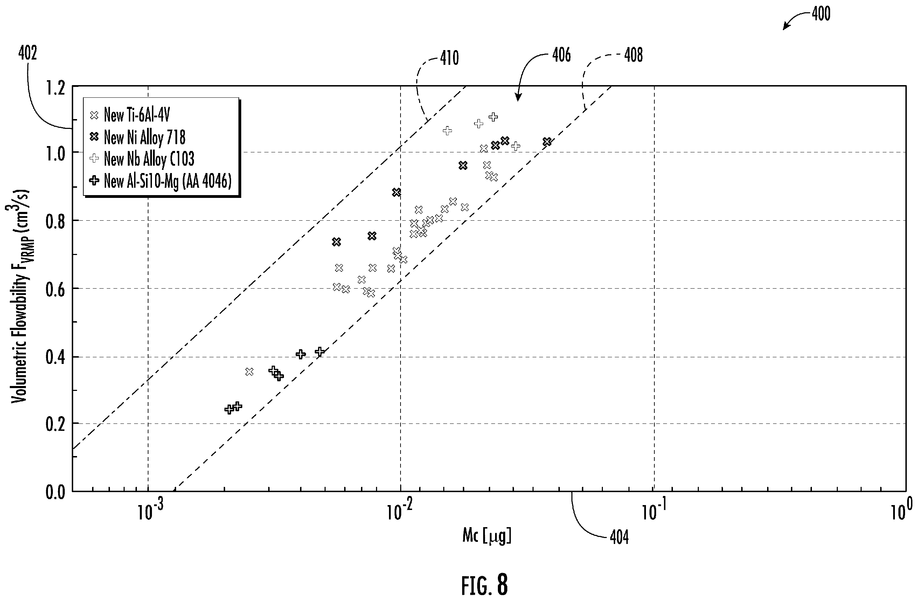

Referring now to FIGS. 7 and 8, various exemplary powders are illustrated in accordance with one or more exemplary embodiments of the present disclosure. In particular, FIG. 7 provides a table including numerical values corresponding to several of the exemplary powders in FIG. 8. FIG. 8 is a plot 400 of powders in accordance with one or more exemplary embodiments of the present disclosure, showing the volumetric flowability, $F_{VRMP}$, on a Y-axis 402 and the average weight, $M_c$, of a particle of size $S_{RMP}$ on an X-axis 404.

As shown, the plot 400 in FIG. 8 depicts a first range 406, with the flowability, $F_{VRMP}$, greater than or equal to $0.3 \times \ln(M_C) + 2$ (line 408) and less than or equal to $0.3 \times \ln(M_C) + 2.4$ (line 410).

As shown, in the exemplary embodiments depicted in FIG. 8, the powders include a titanium alloy (such as Ti-6Al-4V) having a volumetric flowability, $F_{VRMP}$, between 0.35 and 1.05; a nickel or a nickel alloy having a volumetric flowability, $F_{VRMP}$, between 0.7 and 1.1; a niobium or a niobium alloy having a volumetric flowability, $F_{VRMP}$, between 1.0 and 1.2; and an aluminum or an aluminum alloy having a volumetric flowability, $F_{VRMP}$, between 0.2 and 0.5.

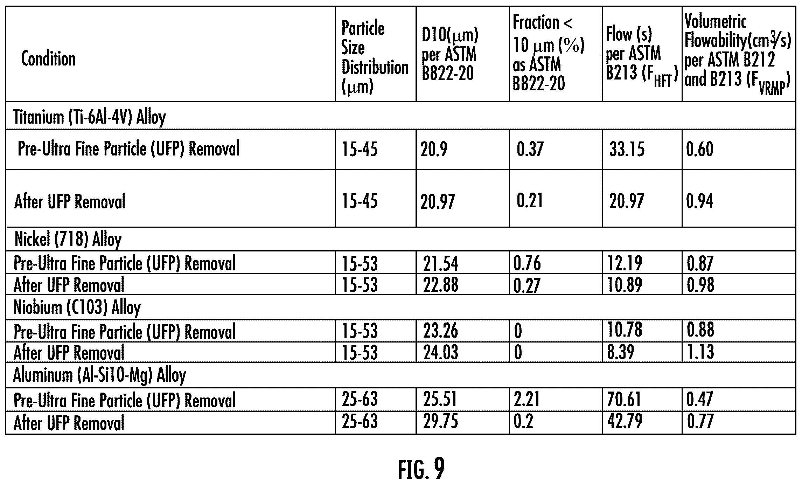

Referring now to FIG. 9, a table of examples of four reactive metal powders exemplifying the benefits of the processes of the present disclosure.

Example 1. The first lot, a titanium alloy, included a first batch of atomized powder prior to the ultrafine particle removal and a second batch of atomized powder after the ultrafine particle removal. The ultrafine particle removal process for this example included mixing the atomized powder with water, adding ultrasonic energy, and straining over a 15 micrometer mesh. As may be seen, the ultrafine particle removal process resulted in a slight increase in the D10 (greater than 0% increase and less than a 10% increase, such as less than a 5% increase), a slight reduction in the fraction below 10 micrometers, and a substantial increase in the flowability (between a 10% improvement and a 100% improvement, such as between a 25% improvement and a 50% improvement).

Example 2. The second lot, a nickel alloy, was carried out in the same way as the first lot (but with a slightly different nominal size/ particle size distribution). The results were similar. Specifically, the ultrafine particle removal process resulted in a slight increase in the D10 (greater than 0% increase and less than a 10% increase), a slight reduction in the fraction below 10 micrometers, and a substantial increase in the flowability (between a 10% improvement and a 100% improvement).

Example 3. The third lot, a niobium alloy, was carried out in the same way as the first lot (but with a slightly different nominal size/ particle size distribution). The results were similar. Specifically, the ultrafine particle removal process resulted in a slight increase in the D10 (greater than 0% increase and less than a 10% increase, such as less than a 5% increase), no measurable change in the fraction below 10 micrometers, and a substantial increase in the flowability (between a 10% improvement and a 100% improvement).

Example 4. The fourth lot, an aluminum alloy, similarly included a first batch of atomized powder prior to the ultrafine particle removal and a second batch of atomized powder after the ultrafine particle removal. The ultrafine particle removal process for this example included spraying the atomized powder with a fluorocarbon liquid and straining over a 20 micrometer mesh. In such a manner, it will be appreciated that the mixture of atomized powder and removal liquid (fluorocarbon liquid in Example 4) was strained over a mesh having a smaller size than a lower bound of the particle size distribution of the tested atomized powder. As may be seen, the ultrafine particle removal process resulted in a slight increase in the D10 (greater than 0% increase and less than a 20% increase), a reduction in the fraction below 10 micrometers, and a substantial increase in the flowability (between a 10% improvement and a 100% improvement, such as between a 25% improvement and a 50% improvement).

In such a manner, it will be appreciated that the D10 values may not be substantially affected by the ultrafine powder removal process.

Further aspects are provided by the subject matter of the following clauses:

A method for removing ultrafine particles from an atomized powder, the method comprising: contacting the atomized powder with a removal liquid, the atomized powder comprising fine particles and ultrafine particles, wherein contacting the atomized powder with the removal liquid comprises adding energy to a mixture of the atomized powder and the removal liquid to detach the ultrafine particles from the fine particles; and separating the removal liquid and ultrafine particles from the fine particles.

The method of any preceding clause, wherein the atomized powder defines a particle size distribution from 0 micrometers to 150 micrometers.

The method of any preceding clause, wherein the atomized powder is a reactive metal powder.

The method of any preceding clause, wherein the reactive metal powder comprises titanium, titanium alloys, zirconium, zirconium alloys, magnesium, magnesium alloys, aluminum and aluminum alloys, nickel and nickel alloys, niobium, niobium alloys, or a combination thereof.

The method of any preceding clause, wherein the reactive metal powder is aluminum or an aluminum alloy, and wherein the removal liquid is a halocarbon liquid.

The method of any preceding clause, further comprising: sieving a raw metal powder to obtain the atomized powder prior to contacting the atomized powder with the removal liquid.

The method of any preceding clause, wherein sieving the raw atomized powder comprises dry sieving the raw metal powder or wet sieving the raw metal powder.

The method of any preceding clause, wherein adding energy to the mixture of the atomized powder and the removal liquid comprises exposing the mixture to ultrasonic energy, mechanically agitating the mixture, adding kinetic energy from a liquid flow, or a combination thereof.

The method of any preceding clause, wherein adding energy to the mixture of the atomized powder and the removal liquid comprises spraying the atomized powder with the removal liquid.

The method of any preceding clause, wherein the removal liquid is water, an organic or inorganic solvent, a halocarbon liquid, a fluorocarbon liquid, or a combination thereof.

The method of any preceding clause, wherein the fine particles form a finished metal powder defining a finish mass, $M_{Finish}$, and wherein the atomized powder defines an initial mass, $M_{Initial}$, prior to contacting the atomized powder with the removal liquid, and wherein a ratio of $M_{Finish}$ to $M_{Initial}$ is greater than 0.90.

The method of any preceding clause, wherein the atomized powder is a first batch of atomized powder, and wherein the method further comprises: receiving the separated removal liquid and ultrafine particles in a recirculation loop; filtering the ultrafine particles from the removal liquid within the recirculation loop; and providing the filtered removal liquid to the first batch of atomized powder or to a second batch of atomized powder.

The method of any preceding clause, wherein adding energy to the mixture of the atomized powder and the removal liquid comprises exposing the mixture to ultrasonic energy.

The method of any preceding clause, wherein adding energy to the mixture of the atomized powder and the removal liquid comprises mechanically agitating the mixture.

The method of any preceding clause, wherein adding energy to the mixture of the atomized powder and the removal liquid comprises adding kinetic energy from a liquid flow.

An ultrafine particle removal system comprising: a container defining a mixing cavity for receiving an atomized powder, the container further comprising an ultrafine particle filter exposed to the mixing cavity; a fluid nozzle in fluid communication with the mixing cavity for providing a removal liquid to the mixing cavity; and a recirculation assembly fluidly coupled to the mixing cavity at a location downstream of the ultrafine particle filter and further fluidly coupled to the fluid nozzle, the recirculation assembly comprising a fine filter for removing ultrafine particles from a mixture received from the mixing cavity.

The ultrafine particle removal system of any preceding clause, wherein the atomized powder defines a particle size distribution from 0 micrometers to 150 micrometers.

The ultrafine particle removal system of any preceding clause, further comprising an ultrasonic probe operably connected to a power source, wherein in response to a command, the ultrasonic probe is configured to provide ultrasonic energy to the mixture of the atomized powder and the removal liquid.

The ultrafine particle removal system of any preceding clause, further comprising a mixer positioned within the mixing cavity for adding energy to a mixture of atomized powder and removal liquid.

The ultrafine particle removal system of any preceding clause, wherein the mixer includes one or more paddles and a shaft, with the one or more paddles mounted to the shaft and configured to rotate about an axis of the shaft to add energy to the mixture.

The ultrafine particle removal system of any preceding clause, wherein ultrafine particle filter defines a plurality of openings defining a diameter between 5 $\mu$m and 10 $\mu$m.

The ultrafine particle removal system of any preceding clause, wherein the container further includes a blocker layer selectively fluidly isolating the ultrafine particle filter from the mixing cavity, the blocker layer including a wall defining a plurality of openings and a respective plurality of flapper valve doors positioned within each of the plurality of openings.

An atomized powder mixture comprising: a reactive metal powder comprising a fine powder formed of a reactive metal, wherein the reactive metal powder defines a volumetric flowability, $F_{VRMP}$, in cubic centimeters per second measured according to ASTM B213-20 and a bulk density, $D_{BULK}$, in grams per cubic centimeter; wherein particles of the reactive metal powder define a size, $S_{RMP}$, in micrometers corresponding to a D10 value of the reactive metal powder, measured according to ASTM B822-20 and an average mass, Mc, in micrograms; wherein the reactive metal powder has been processed to remove an ultrafine metal powder from the fine powder such that a volumetric flowability $F_{VRMP}$ is greater than or equal to $0.3 \times \ln(M_C) + 2$, and wherein the average mass, $M_C$, equals

$$\frac{4\pi(S_{RMP}/2)^3}{3} \times D_{BULK},$$

wherein $S_{RMP}$ is between 5 micrometers and 30 micrometers, $F_{VRMP}$ is between 0.1 cubic centimeter per second and 1.4 cubic centimeters per second, and $D_{BULK}$ is between 1.5 and 20 grams per cubic centimeter.

The atomized powder mixture of any preceding clause, wherein the reactive metal powder comprises titanium, titanium alloys, zirconium, zirconium alloys, magnesium, magnesium alloys, aluminum, aluminum alloys, nickel, nickel alloys, niobium, niobium alloys, or a combination thereof.

The atomized powder mixture of any preceding clause, wherein the reactive metal powder defines a particle size distribution between 0 micrometers and 150 micrometers.

The atomized powder mixture of any preceding clause, wherein the $F_{VRMP}$ is less than or equal to $0.3 \times \ln (M_C) + 2.4$.

The atomized powder mixture of any preceding clause, wherein the reactive metal powder defines an apparent density, $D_{RMP}$, in grams per cubic centimeter measured according to ASTM B212-21, wherein $D_{RMP}$ is between 0.8 and 11 grams per cubic centimeters.

The atomized powder mixture of any preceding clause, wherein the reactive metal powder defines a Hall flow test flowability, $F_{HFT}$, and wherein the volumetric flowability $F_{VRMP}$ is equal to:

$$F_{VRMP} = \frac{\left(50/F_{HFT}\right)}{D_{RMP}}.$$

An atomized powder mixture formed using a method of any preceding clause.

An atomized powder mixture formed using the ultrafine particle removal system of any preceding clause.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

**Claims**

1. A method for removing ultrafine particles (206) from an atomized powder (306), the method comprising:

   contacting the atomized powder (306) with a removal liquid (324), the atomized powder (306) comprising fine particles (202) and ultrafine particles (206), wherein contacting the atomized powder (306) with the removal liquid (324) comprises adding energy to a mixture (336) of the atomized powder (306) and the removal liquid (324) to detach the ultrafine particles (206) from the fine particles (202); and
   separating the removal liquid (324) and ultrafine particles (206) from the fine particles (202).

2. The method of claim 1, wherein the atomized powder (306) defines a particle size distribution from 0 micrometers to 150 micrometers.

3. The method of claim 1, wherein the atomized powder (306) is a reactive metal powder.

4. The method of claim 3, wherein the reactive metal powder comprises titanium, titanium alloys, zirconium, zirconium alloys, magnesium, magnesium alloys, aluminum and aluminum alloys, nickel and nickel alloys, niobium, niobium alloys, or a combination thereof.

5. The method of claim 3, wherein the reactive metal powder is aluminum or an aluminum alloy, and wherein the removal liquid (324) is a halocarbon liquid.

6. The method of claim 1, further comprising:
   sieving a raw metal powder to obtain the atomized powder (306) prior to contacting the atomized powder (306) with the removal liquid (324).

7. The method of claim 6, wherein sieving the raw atomized powder (306) comprises dry sieving the raw metal powder or wet sieving the raw metal powder.

8. The method of claim 1, wherein adding energy to the mixture (336) of the atomized powder (306) and the removal liquid (324) comprises exposing the mixture (336) to ultrasonic energy, mechanically agitating the mixture (336), adding kinetic energy from a liquid flow, or a combination thereof.

9. The method of claim 1, wherein the removal liquid (324) is water, an organic or inorganic solvent, a halocarbon liquid, a fluorocarbon liquid, or a combination thereof.

10. The method of claim 1, wherein the fine particles (202) form a finished metal powder defining a finish mass, $M_{Finish}$, and wherein the atomized powder (306) defines an initial mass, $M_{Initial}$, prior to contacting the atomized powder (306) with the removal liquid (324), and wherein a ratio of $M_{Finish}$ to $M_{Initial}$ is greater than 0.90

**11.** The method of claim 1, wherein the atomized powder (306) is a first batch of atomized powder (306), and wherein the method further comprises:

receiving the separated removal liquid (324) and ultrafine particles (206) in a recirculation loop (330);

filtering the ultrafine particles (206) from the removal liquid (324) within the recirculation loop (330); and

providing the filtered removal liquid (324) to the first batch of atomized powder (306) or to a second batch of atomized powder (306).

**12.** An atomized powder (306) mixture (336) comprising:

a reactive metal powder comprising a fine powder formed of a reactive metal,

wherein the reactive metal powder defines a volumetric flowability , $F_{VRMP}$, in centimeters cubed per second measured according to ASTM B213-20 and a bulk density, $D_{BULK}$, in grams per centimeter cubed;

wherein particles (202, 204) of the reactive metal powder define a size, $S_{RMP}$, in micrometers corresponding to a D10 value of the reactive metal powder, measured according to ASTM B822-20 and an average mass, Mc, in micrograms;

wherein the reactive metal powder has been processed to remove an ultrafine metal powder from the fine powder such that a volumetric flowability $F_{VRMP}$ is greater than or equal to $0.3 \times \ln (M_C) + 2$, and

wherein the average mass, $M_C$, equals

$$\frac{4\pi(S_{RMP}/2)^3}{3} \times D_{BULK},$$

wherein $S_{RMP}$ is between 5 micrometers and 30 micrometers, $F_{VRMP}$ is between 0.1 centimeters cubed per second and 1.4 centimeters cubed per second, and $D_{BULK}$ is between 1.5 and 20 grams per centimeter cubed.

**13.** The atomized powder mixture (336) of claim 12, wherein the reactive metal powder comprises titanium, titanium alloys, zirconium, zirconium alloys, magnesium, magnesium alloys, aluminum, aluminum alloys, nickel, nickel alloys, niobium, niobiumalloys, or a combination thereof.

**14.** The atomized powder mixture (336) of claim 13, wherein the reactive metal powder defines a particle size distribution between 0 micrometers and 106 micrometers.

**15.** The atomized powder mixture (336) of claim 13, wherein the $F_{VRMP}$ is less than or equal to $0.3 \times \ln (M_C) + 2.4$.

FIG. 1

FIG. 2

FIG. 3

FIG. 4

FIG. 5

EP 4 491 300 A1

FIG. 6

| $S_{RMP}$ (D10; micrometers) | $F_{HFT}$ (Flowability; (s)) | $D_{RMP}$ (g/cm3) | Alloy | Mc (micrograms) | $D_{BULK}$ (g/cm$^3$) | $F_{VRMP}$ (Volumetric Flow; cm$^3$/s) |
|---|---|---|---|---|---|---|
| 12.16 | 14.06 | 4.7 | Ni Alloy 718 | 7.71E-03 | 8.19 | 0.76 |
| 17.65 | 10.406 | 4.7 | Ni Alloy 718 | 2.36E-02 | 8.19 | 1.02 |
| 10.89 | 14.42 | 4.7 | Ni Alloy 718 | 5.54E-03 | 8.19 | 0.74 |
| 19.64 | 12.224 | 4.7 | Ni Alloy 718 | 3.25E-02 | 8.19 | 0.87 |
| 16.03 | 11.02 | 4.7 | Ni Alloy 718 | 1.77E-02 | 8.19 | 0.97 |
| 18.19 | 10.2683 | 4.7 | Ni Alloy 718 | 2.58E-02 | 8.19 | 1.04 |
| 13.11 | 12.02 | 4.7 | Ni Alloy 718 | 9.65E-03 | 8.19 | 0.89 |
| 20.72 | 10.3087 | 4.7 | Ni Alloy 718 | 3.81E-02 | 8.19 | 1.03 |
| 17.46 | 25.8493 | 2.53 | Ti-6Al-4V | 1.24E-02 | 4.43 | 0.76 |
| 17.31 | 25.6708 | 2.53 | Ti-6Al-4V | 1.20E-02 | 4.43 | 0.77 |
| 16.42 | 31.6534 | 2.53 | Ti-6Al-4V | 1.03E-02 | 4.43 | 0.62 |
| 16.94 | 25.9873 | 2.53 | Ti-6Al-4V | 1.13E-02 | 4.43 | 0.76 |
| 16.10 | 28.4108 | 2.53 | Ti-6Al-4V | 9.67E-03 | 4.43 | 0.70 |
| 21.36 | 21.15 | 2.53 | Ti-6Al-4V | 2.26E-02 | 4.43 | 0.93 |
| 21.23 | 23.04 | 2.53 | Ti-6Al-4V | 2.22E-02 | 4.43 | 0.86 |
| 21.65 | 21.294 | 2.53 | Ti-6Al-4V | 2.35E-02 | 4.43 | 0.93 |
| 20.97 | 19.517 | 2.53 | Ti-6Al-4V | 2.14E-02 | 4.43 | 1.01 |
| 21.20 | 20.469 | 2.53 | Ti-6Al-4V | 2.21E-02 | 4.43 | 0.97 |
| 17.10 | 8.5456 | 5.28 | Nb Alloy C103 | 2.32E-02 | 8.85 | 1.11 |
| 18.32 | 9.287 | 5.28 | Nb Alloy C103 | 2.85E-02 | 8.85 | 1.02 |
| 14.90 | 8.8723 | 5.28 | Nb Alloy C103 | 1.53E-02 | 8.85 | 1.07 |
| 16.36 | 8.709 | 5.28 | Nb Alloy C103 | 2.03E-02 | 8.85 | 1.09 |
| 24.03 | 8.39 | 5.28 | Nb Alloy C103 | 6.43E-02 | 8.85 | 1.13 |
| 23.60 | 61.9 | 1.51 | Al-Si10-Mg (AA 4046) | 1.84E-02 | 2.67 | 0.53 |
| 13.10 | 93.73 | 1.51 | Al-Si10-Mg (AA 4046) | 3.14E-03 | 2.67 | 0.35 |
| 14.20 | 82.29 | 1.51 | Al-Si10-Mg (AA 4046) | 4.00E-03 | 2.67 | 0.40 |
| 15.10 | 80.75 | 1.51 | Al-Si10-Mg (AA 4046) | 4.81E-03 | 2.67 | 0.41 |
| 11.70 | 132.65 | 1.51 | Al-Si10-Mg (AA 4046) | 2.24E-03 | 2.67 | 0.25 |
| 13.30 | 97.17 | 1.51 | Al-Si10-Mg (AA 4046) | 3.29E-03 | 2.67 | 0.34 |
| 11.43 | 137.51 | 1.51 | Al-Si10-Mg (AA 4046) | 2.09E-03 | 2.67 | 0.24 |
| 27.03 | 42.14 | 1.51 | Al-Si10-Mg (AA 4046) | 2.76E-02 | 2.67 | 0.79 |
| 29.75 | 42.79 | 1.51 | Al-Si10-Mg (AA 4046) | 3.68E-02 | 2.67 | 0.77 |

FIG. 7

FIG. 8

| Condition | Particle Size Distribution (μm) | D10(μm) per ASTM B822-20 | Fraction < 10 μm (%) as ASTM B822-20 | Flow (s) per ASTM B213 ($F_{HFT}$) | Volumetric Flowability(cm³/s) per ASTM B212 and B213 ($F_{VRMP}$) |
|---|---|---|---|---|---|
| **Titanium (Ti-6Al-4V) Alloy** | | | | | |
| Pre-Ultra Fine Particle (UFP) Removal | 15-45 | 20.9 | 0.37 | 33.15 | 0.60 |
| After UFP Removal | 15-45 | 20.97 | 0.21 | 20.97 | 0.94 |
| **Nickel (718) Alloy** | | | | | |
| Pre-Ultra Fine Particle (UFP) Removal | 15-53 | 21.54 | 0.76 | 12.19 | 0.87 |
| After UFP Removal | 15-53 | 22.88 | 0.27 | 10.89 | 0.98 |
| **Niobium (C103) Alloy** | | | | | |
| Pre-Ultra Fine Particle (UFP) Removal | 15-53 | 23.26 | 0 | 10.78 | 0.88 |
| After UFP Removal | 15-53 | 24.03 | 0 | 8.39 | 1.13 |
| **Aluminum (Al-Si10-Mg) Alloy** | | | | | |
| Pre-Ultra Fine Particle (UFP) Removal | 25-63 | 25.51 | 2.21 | 70.61 | 0.47 |
| After UFP Removal | 25-63 | 29.75 | 0.2 | 42.79 | 0.77 |

FIG. 9

Europäisches
Patentamt

European
Patent Office

Office européen
des brevets

# EUROPEAN SEARCH REPORT

**Application Number**

EP 24 18 4918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 403 695 A (DONGGUAN HYPER TECH CO LTD) 26 February 2021 (2021-02-26) * paragraph [0006]; claims 1-3,9; example 1 * | 1-3,6-11 | INV. B22F1/05 B22F1/065 B22F1/14 B22F3/00 |
| X | US 2022/062992 A1 (LIU ZUMING [CN] ET AL) 3 March 2022 (2022-03-03) | 12-15 | B33Y70/00 B04C5/04 |
| Y | * paragraphs [0071] - [0075]; example 1 * | 3,4 | B22F9/08 B22F1/145 |
| X | CN 112 831 694 B (UNIV SHANGHAI JIAOTONG) 20 December 2022 (2022-12-20) | 12-15 | B01D35/20 B03B5/00 |
| Y | * claims 1,2,4; example 4 * | 3,4 | |
| Y | US 2022/219235 A1 (DOPLER MARTIN [AT] ET AL) 14 July 2022 (2022-07-14) * paragraphs [0003], [0017], [0024], [0035], [0040], [0054]; claims 1,4-5; figures 1-2,4; example 1 * | 1,3-5 | |
| Y | JP 2002 001161 A (NIPPON CATALYTIC CHEM IND) 8 January 2002 (2002-01-08) * paragraphs [0009], [0027]; figures 1-2 * | 1,3-5 | **TECHNICAL FIELDS SEARCHED (IPC)** B22F B07B |
| A | US 2022/062986 A1 (YOSHIDOME KAZUHIRO [JP] ET AL) 3 March 2022 (2022-03-03) * paragraphs [0090], [0109], [0110], [0132] - [0133]; figure 1; table 1 * | 1-3,7-12 | B33Y B03B B01D B04C |

The present search report has been drawn up for all claims

| Place of search | Date of completion of the search | Examiner |
|---|---|---|
| The Hague | 29 November 2024 | Aliouane, Nadir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4918

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | Publication date | Patent family member(s) | | Publication date |
|---|---|---|---|---|
| CN 112403695 A | 26-02-2021 | NONE | | |
| US 2022062992 A1 | 03-03-2022 | CN | 111996414 A | 27-11-2020 |
| | | US | 2022062992 A1 | 03-03-2022 |
| | | WO | 2022042088 A1 | 03-03-2022 |
| CN 112831694 B | 20-12-2022 | CN | 112831694 A | 25-05-2021 |
| | | US | 2023175102 A1 | 08-06-2023 |
| | | WO | 2022142401 A1 | 07-07-2022 |
| US 2022219235 A1 | 14-07-2022 | CA | 3141689 A1 | 10-12-2020 |
| | | CN | 114040825 A | 11-02-2022 |
| | | EP | 3747574 A1 | 09-12-2020 |
| | | US | 2022219235 A1 | 14-07-2022 |
| | | WO | 2020244948 A1 | 10-12-2020 |
| JP 2002001161 A | 08-01-2002 | JP | 3965015 B2 | 22-08-2007 |
| | | JP | 2002001161 A | 08-01-2002 |
| US 2022062986 A1 | 03-03-2022 | CN | 114121436 A | 01-03-2022 |
| | | JP | 7569641 B2 | 18-10-2024 |
| | | JP | 2022037533 A | 09-03-2022 |
| | | US | 2022062986 A1 | 03-03-2022 |

EPO FORM P0459

For more details about this annex : see Official Journal of the European Patent Office, No. 12/82

**REFERENCES CITED IN THE DESCRIPTION**

**Patent documents cited in the description**

- US 11198179 B
- US 20190001416 A
- US 11235385 B
- CA 3138388